# EUROPÄISCHE PATENTSCHRIFT

(11) **EP 2 149 204 B1**
(45) Veröffentlichungstag und Bekanntmachung des Hinweises auf die Patenterteilung: **02.05.2012**
(21) Anmeldenummer: 08748982.9
(22) Anmeldetag: 18.04.2008
(51) Int. Cl.: A61C 17/22, H04B 1/713, H04B 7/12

(54) **ZAHNBÜRSTE SOWIE VERFAHREN ZUR DRAHTLOSEN UNIDIREKTIONALEN DATENÜBERTRAGUNG**
TOOTHBRUSH AND METHOD FOR WIRELESS UNIDIRECTIONAL DATA TRANSMISSION
BROSSE À DENTS ET PROCÉDÉ DE TRANSMISSION DE DONNÉES UNIDIRECTIONNELLE SANS FIL

(30) Priorität: 26.04.2007 DE 102007020100
(43) Veröffentlichungstag der Anmeldung: 03.02.2010
(73) Patentinhaber: Braun GmbH, 61476 Kronberg/Taunus (DE)
(72) Erfinder: STRATMANN, Martin, 60318 Frankfurt/Main (DE); SCHIEBAHN, Matthias, 65520 Bad Camberg (DE)
(74) Vertreter: Zetterer, Gerd
(86) Internationale Anmeldenummer: PCT/EP2008/003122
(87) Internationale Veröffentlichungsnummer: WO 2008/131874

(56) Entgegenhaltungen:
- WO-A-95/34960
- DE-A1- 19 506 129
- DE-A1- 19 924 017
- US-A1- 2004 152 479

## Beschreibung

Die vorliegende Erfindung betrifft eine Zahnbürste sowie ein Verfahren zur drahtlosen unidirektionalen Datenübertragung zwischen einem Sender und einem Empfänger. Bevorzugte Anwendung findet dieses Verfahren bei der Übertragung von Daten von einem Elektrokleingerät, beispielsweise einer Zahnbürste, zu einer externen Anzeigeeinrichtung.

Aus der EP 0892701 B1 ist ein Rasiersystem bekannt, das einen elektrischen Rasierapparat und eine externe Einrichtung aufweist, zwischen denen ein bidirektionaler drahtloser Datenaustausch stattfinden kann. Die externe Einrichtung ist auch zum Anzeigen von Informationen geeignet.

Aus der DE 10332324 A1 ist ein Verfahren zur Übertragung von Daten über eine drahtlose Kommunikationsverbindung zwischen einem Sender und einem Empfänger bekannt, bei dem der Sender dieselben zu übertragenden Daten unabhängig von einer Empfangsbestätigung eines Empfängers in mehrere verschiedene Übertragungskanäle einspeist, und bei dem der Empfänger die Daten von einem Übertragungskanal übernimmt, auf dem sie ungestört übertragen wurden.

Aus der DE 199 24 017 A1 ist ein Verfahren zur Simplex-Datenübertragung eines Datentelegramms bekannt, bei der das Datentelegramm mehrfach übertragen wird, wobei die Mehrfachübertragung bei mindestens zwei unterschiedlichen Trägerfrequenzen ausgeführt wird.

Es ist bereits eine Zahnbürste mit einer Anzeigeeinrichtung bekannt, mit der beispielsweise der Ladezustand eines in der Zahnbürste eingebauten Akkumulators angezeigt wird. Da diese Anzeigeeinrichtung im Griffteil der Zahnbürste eingebaut ist, kann sie vom Benutzer während des Zähneputzens nicht oder nur schlecht abgelesen werden.

Es ist Aufgabe der vorliegenden Erfindung eine Zahnbürste mit verbessertem Gebrauchsnutzen und ein einfaches Verfahren zur drahtlosen unidirektionalen Datenübertragung mit guter Störresistenz anzugeben.

Zur Lösung dieser Aufgabe wird ein System aus einer Zahnbürste und einem separaten Zusatzgerät angegeben, bei dem in der Zahnbürste ein Sender und im Zusatzgerät ein Empfänger vorhanden ist. Die Zahnbürste weist einen Sensor auf, der mit dem Sender gekoppelt ist. Der Sender ist zur Übertragung der vom Sensor abgegebenen Daten ausgelegt. Der Sensor ermittelt beispielsweise folgende Betriebsparameter der Zahnbürste: den Ladezustand eines in der Zahnbürste eingebauten Akkumulators und/oder die bereits abgelaufene Putzzeit und/oder den Anpreßdruck, mit dem ein Benutzer die Zahnbürste beim Zähneputzen gegen die Zähne preßt. Das Zusatzgerät enthält einen Empfänger zum Empfangen der vom Sender übertragenen Daten und eine Anzeigeeinrichtung zur Anzeige der empfangenen Daten.

Das erfindungsgemäße Verfahren ist zur drahtlosen unidirektionalen Datenübertragung zwischen einem Sender und einem Empfänger gedacht, bei der somit der Sender vom Empfänger keine Information über den richtigen und vollständigen Empfang der übertragenen Daten erhält. Das Verfahren ist ferner für Anwendungen gedacht, bei denen mehrere baugleiche Sender und Empfänger nebeneinander betrieben werden, jedoch jeweils nur eine Datenübertragung von einem bestimmten Sender zu einem bestimmten Empfänger gewünscht ist.

Bei dem Verfahren zur drahtlosen unidirektionalen Datenübertragung zwischen einem Sender und einem Empfänger, sendet der Sender einen ersten zu übertragenden Datensatz mehrmals zeitlich nacheinander auf voneinander verschiedenen Übertragungskanälen, wobei die Anzahl der verwendeten Übertragungskanäle kleiner ist als die Anzahl der Wiederholungen, mit der der Sender den ersten Datensatz überträgt. Danach kann der Sender weitere Datensätze in gleicher Weise senden. Die Reihenfolge der dabei vom Sender verwendeten Übertragungskanäle ist durch eine vorzugsweise pseudozufällige Folge festgelegt, d.h. der Sender verwendet nacheinander die zur Verfügung stehenden Übertragungskanäle in der Reihenfolge, die durch die festgelegte Folge vorgegeben ist. Eine Pseudo-Zufallsfolge hat den Vorteil, daß mit großer Wahrscheinlichkeit mehrere Sender, die dieselbe Folge verwenden, trotzdem nicht gleichzeitig denselben Kanal benutzen. Da die Erzeugung einer Pseudo-Zufallsfolge in einem Mikrokontroller sehr viel Rechenzeit erfordert, ist die Pseudo-Zufallsfolge vorzugsweise im Sender fest gespeichert. Der Empfänger ist immer nur auf einen der Übertragungskanäle eingestellt, empfängt die Datensätze auf diesem Übertragungskanal, wählt von den empfangenen Datensätzen nur die ungestörten aus.

Die festgelegte Folge der Übertragungskanäle hat vorzugsweise die Eigenschaft, daß zwei in der Folge unmittelbar aufeinanderfolgende Übertragungskanäle voneinander verschieden sind, und daß die Länge der Folge größer ist als die Anzahl der Wiederholungen, mit der ein Datensatz gesendet wird. Ferner hat die Folge vorzugsweise die Eigenschaft, daß jeder Datensatz mindestens einmal auf jedem Übertragungskanal jedoch höchstens zweimal auf demselben Übertragungskanal gesendet wird.

Das oben skizzierte Verfahren hat den Vorteil einer genügend großen Störresistenz bei vergleichsweise geringem Aufwand bei der Datenübertragung. Vorzugsweise haben die Übertragungskanäle unterschiedliche Frequenzen, die innerhalb des zur Datenübertragung verwendeten Frequenzbandes möglichst gleichmäßig verteilt sind, beispielsweise liegt ein Übertragungskanal im unteren Bereich des Frequenzbandes, ein anderer in der Mitte und ein dritter im oberen Bereich des Frequenzbandes. Die für die Datenübertragung verwendeten Übertragungskanäle sind im Sender und im Empfänger festgelegt. Damit ein Empfänger nur die Daten empfängt, die von einem bestimmten Sender ausgesendet werden, kann in einer Initialisierungsphase im Empfänger die Kennung des zugehörigen Senders gespeichert werden. Natürlich kann auch vorgesehen sein, daß ein Empfänger von mehreren Sendern Daten empfangen kann.

Der Empfänger überwacht zunächst nur einen der festgelegten Übertragungskanäle. Da die vom zugehörigen Sender gesendeten Daten zumindest einmal auf jedem Übertragungskanal gesendet werden, kann die Datenübertragung bei ungestörtem Empfang auf diesem einen Übertragungskanal abgewickelt werden. Stellt der Empfänger jedoch fest, daß auf diesem Übertragungskanal über einen bestimmten Zeitraum hinweg nur für ihn nicht verwertbare Daten gesendet werden, schaltet er auf einen anderen Übertragungskanal um. Sollte er auf diesem Übertragungskanal ungestörte Daten empfangen können, schaltet er erst dann auf den nächsten festgelegten Übertragungskanal weiter, wenn er über einen bestimmten Zeitraum hinweg keine ungestörten Daten mehr empfangen kann, wobei der nächste Übertragungskanal auch wieder der erste Übertragungskanal sein kann. Vorzugsweise wird der Empfänger erst dann wieder den ersten Übertragungskanal einstellen, wenn er auf allen anderen Übertragungskanälen keinen ungestörten Empfang hatte.

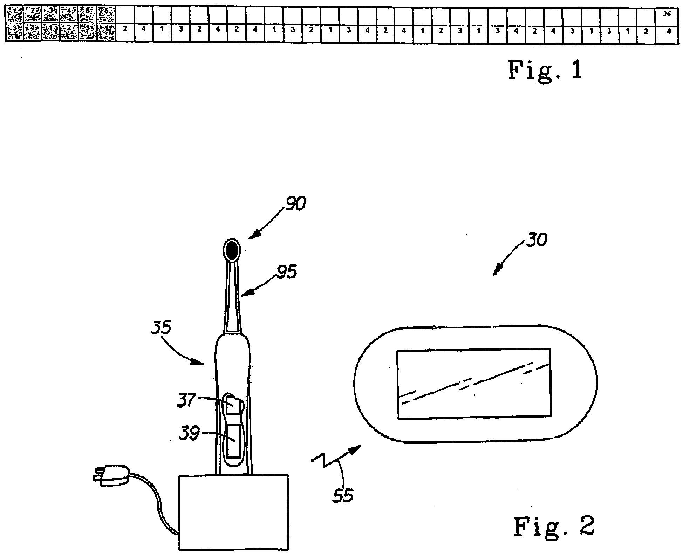

Die Erfindung wird nachstehend anhand eines in Fig. 2 schematisch dargestellten Ausführungsbeispiels erläutert, nämlich anhand einer elektrischen Zahnbürste 90, die ein Handteil 35 mit einer Aufsteckbürste 95 und eine separate Anzeigeeinrichtung 30 aufweist, wobei im Handteil mittels eines Sensors 37 ermittelte Daten durch einen Sender 39 drahtlos zur Anzeigeeinrichtung 30 übertragen werden sollen, was durch einen Pfeil 55 dargestellt ist. Beispielsweise wird im Handteil der Anpreßdruck ermittelt, mit dem ein Benutzer die Aufsteckbürste beim Zähneputzen gegen die Zähne drückt, und/oder die Putzzeit und/oder der Ladezustand eines im Handteil zur Stromversorgung der elektrischen Zahnbürste enthaltenen Akkumulators. Fig. 1 zeigt ein Beispiel für eine geeignete Pseudo-Zufallsfolge.

Die Datenübertragung wird nachfolgend beschrieben. Zunächst wird ein erster Datensatz erzeugt, der beispielsweise eine Kennung, eine Zeitinformation und/oder den aktuellen Anpreßdruck und/oder den Ladezustand umfaßt. Die Kennung dient zur Individualisierung der jeweiligen elektrischen Zahnbürste, und kann beispielsweise aus einer Typbezeichnung und einer Seriennummer bestehen. Mehrere ansonsten baugleiche Zahnbürsten unterscheiden sich durch ihre Kennung, sodaß diese parallel betrieben werden können, ohne sich gegenseitig zu stören. Dieser Datensatz wird vom Sender mehrmals, beispielsweise 6-mal, zeitlich nacheinander gesendet, wobei mehrere Übertragungskanäle verwendet werden, beispielsweise 4 verschiedene Sendefrequenzen. Somit ist die Anzahl der Wiederholungen, mit der ein einzelner Datensatz gesendet wird, größer als die Anzahl der verwendeten Übertragungskanäle. Die Reihenfolge, in der die einzelnen Übertragungskanäle genutzt werden, ist durch eine Pseudo-Zufallsfolge vorgegeben, die im Sender fest gespeichert ist. Danach wird ein zweiter Datensatz erzeugt, der beispielsweise dieselbe Kennung, eine zweite Zeitinformation und/oder einen zweiten aktuellen Anpreßdruck und/oder den aktuellen Ladezustand umfaßt. Der zweite Datensatz wird in diesem Beispiel ebenfalls 6-mal nacheinander gesendet, wobei ebenfalls 4 verschiedene Übertragungskanäle benutzt werden. Danach können fortlaufend weitere Datensätze in gleicher Weise übertragen werden. Die Pseudo-Zufallsfolge enthält beispielsweise 36 Elemente, von denen jedes Element einen der verwendeten Übertragungskanäle kennzeichnet. Die Pseudo-Zufallsfolge hat in diesem Beispiel die Eigenschaft, daß jeder der 4 Übertragungskanäle in einem Block aus 6 aufeinanderfolgenden Elementen mindestens einmal und höchstens zweimal vorkommt, wobei aufeinanderfolgende Elemente voneinander verschieden sind, und sich die Reihenfolge der Übertragungskanäle nach der Übertragung von 6 Datensätzen wiederholt. In Fig. 1 ist der erste Block schattiert dargestellt.

Der Empfänger ist jeweils nur auf einen Übertragungskanal abgestimmt. Um einen geringen Stromverbrauch zu erreichen, wird der Empfänger immer nur so lange eingeschaltet, wie er benötigt, um festzustellen, ob auf diesem Übertragungskanal für ihn bestimmte Daten gesendet wurden. Ist dies der Fall, bleibt der Empfänger so lange eingeschaltet, bis er über einen bestimmten Zeitraum hinweg keine für ihn bestimmte Daten mehr empfangen hat. Ob Daten für ihn bestimmt sind, entscheidet der Empfänger anhand einer in einer Initialisierungsphase gespeicherten Kennung, die vom Sender mit übertragen wird.

Der Empfänger schaltet erst dann auf einen anderen Übertragungskanal um, wenn er über einen bestimmten Zeitraum hinweg nur für ihn nicht verwertbare Daten empfangen hat. Die Entscheidung, ob Daten verwertbar sind oder nicht, kann mit an sich bekannten Verfahren erfolgen, beispielsweise über die Detektierung von Synchronisationsmustern sowie ein Prüfsummenverfahren.

## Patentansprüche

1. Verfahren zur drahtlosen unidirektionalen Datenübertragung zwischen einem Sender und einem Empfänger, bei dem der Sender einen zu übertragenden Datensatz mehrmals zeitlich nacheinander auf mehreren Übertragungskanälen sendet, und eine Folge von Übertragungskanälen verwendet ist, innerhalb der die Reihenfolge der verwendeten Übertragungskanäle vorgegeben ist, **dadurch gekennzeichnet, dass** der Empfänger Datensätze auf jeweils nur einem Übertragungskanal empfängt und die Anzahl der verwendeten Übertragungskanäle kleiner ist als die Anzahl der Wiederholungen, mit der der Sender den Datensatz überträgt.

2. Verfahren nach Anspruch 1, wobei zwei unmittelbar nacheinander verwendete Übertragungskanäle voneinander verschieden sind, und dass die Folge von Übertragungskanälen eine Anzahl von Übertragungskanälen enthält, die größer ist als die Anzahl der Wiederholungen, mit der ein Datensatz gesendet wird.

3. Verfahren nach Anspruch 1 oder 2, wobei jeder Datensatz mindestens einmal auf jedem Übertragungskanal jedoch höchstens zweimal auf demselben Übertragungskanal gesendet wird.

4. Verfahren nach einem der vorhergehenden Ansprüche, wobei die Folge eine Pseudo-Zufallsfolge ist, die im Sender gespeichert ist.

5. Verfahren nach einem der vorhergehenden Ansprüche, wobei der Empfänger jeweils nur auf einen Übertragungskanal abgestimmt ist, und der Empfänger auf einen anderen Übertragungskanal umschaltet, wenn er über einen bestimmten Zeitraum hinweg nur für ihn nicht verwertbare Daten empfangen hat.

6. Zahnbürste mit einem Sender der dazu ausgelegt ist einen zu übertragenden Datensatz mehrmals zeitlich nacheinander auf mehreren Übertragungskanälen zu senden, und eine Folge von Übertragungskanälen zu verwenden, innerhalb der die Reihenfolge der verwendeten Übertragungskanäle vorgegeben ist,
**dadurch gekennzeichnet,**
**dass** die Anzahl der verwendeten Übertragungskanäle kleiner ist als die Anzahl der Wiederholungen, mit der der Sender den Datensatz überträgt.

7. Zahnbürste nach Anspruch 6, wobei sie einen Sensor aufweist, der mit dem Sender gekoppelt ist, und der Sender zur Übertragung der vom Sensor abgegebenen Daten ausgelegt ist.

8. System aus einer Zahnbürste, die einen Sender nach Anspruch 6 aufweist, und einem separaten Zusatzgerät, das einen Empfänger zur drahtlosen unidirektionalen Datenübertragung von der Zahnbürste zum Zusatzgerät aufweist, wobei der Empfänger dazu ausgelegt ist Datensätze auf jeweils nur einem Übertragungskanal zu empfangen.

9. System nach Anspruch 8, wobei das Zusatzgerät eine Anzeigeeinrichtung zur Anzeige der vom Sender übertragenen Daten aufweist.

## Claims

1. A method for wireless, unidirectional data transmission between a transmitter and a receiver, in which the transmitter sends a data set to be transmitted repeatedly in chronological succession over multiple transmission channels, and in which a sequence of transmission channels is used within which the order of the employed transmission channels is predetermined, **characterized in that**
the receiver receives data sets on only one respective transmission channel and the number of transmission channels used is less than the number of repetitions with which the transmitter transmits the data set.

2. The method according to claim 1, wherein two transmission channels used immediately one after the other are different from one another; and that the sequence of transmission channels includes a number of transmission channels that is greater than the number of repetitions with which a data set is sent.

3. The method according to claim 1 or 2, wherein each data set is sent at least once on each transmission channel, but no more than twice on the same transmission channel.

4. The method according to any one of the preceding claims, wherein the sequence is a pseudo-random sequence that is stored in the transmitter.

5. The method according to any one of the preceding claims, wherein the receiver is respectively tuned to only one transmission channel, and the receiver switches to a different transmission channel if, for a specified period of time, it has only received data that it cannot use.

6. A toothbrush with a transmitter that is designed to repeatedly send a data set to be transmitted in chronological succession on multiple transmission channels, and to employ a sequence of transmission channels within which the order of the transmission channels used is predetermined,
**characterized in that**
the number of transmission channels used is less than the number of repetitions with which the transmitter transmits the data set.

7. The toothbrush according to claim 6, wherein it has a sensor that is coupled with the transmitter, and wherein the transmitter is designed to transmit data output by the sensor.

8. A system including a toothbrush that has a transmitter according to claim 6 and a separate auxiliary device that has a receiver for wireless, unidirectional data transmission from the toothbrush to the auxiliary device, wherein the receiver is designed to receive data sets on only one respective transmission channel.

9. The system according to Claim 8, wherein the auxiliary device has a display device for displaying the data transmitted by the transmitter.

## Revendications

1. Procédé de transmission de données unidirectionnel sans fil entre un émetteur et un récepteur, dans lequel l'émetteur émet des données à transmettre plusieurs fois successivement sur plusieurs canaux de transmission, et utilise une série de canaux de transmission, où la succession des canaux de transmission utilisés est prédéterminée, **caractérisé en ce que** le récepteur reçoit des données sur respectivement un seul canal de transmission, et le nombre des canaux de transmission utilisés est inférieur au nombre de répétitions avec lesquelles l'émetteur transmet les données.

2. Procédé selon la revendication 1, dans lequel deux canaux utilisés immédiatement l'un après l'autre sont différents l'un de l'autre, et où la suite de canaux de transmission contient un nombre de canaux de transmission qui est supérieur au nombre de répétitions avec lesquelles un jeu de données est émis.

3. Procédé selon la revendication 1 ou 2, dans lequel chaque jeu de données est envoyé au moins une fois sur chaque canal de transmission, mais au maximum deux fois sur le même canal de transmission.

4. Procédé selon l'une des revendications précédentes, où la suite est une suite pseudo-aléatoire qui est enregistrée dans l'émetteur.

5. Procédé selon l'une des revendications précédentes, où le récepteur est accordé à un seul canal de transmission et le récepteur passe à un autre canal de transmission s'il n'a reçu que des données qu'il ne peut exploiter sur une période de temps déterminée.

6. Brosse à dents équipée d'un émetteur pour émettre un jeu de données à émettre plusieurs fois successivement sur plusieurs canaux de transmission, et pour utiliser une série de canaux de transmission, où la série des canaux de transmission utilisés est prédéterminée,
**caractérisée en ce que**
le nombre des canaux de transmission utilisés est inférieur au nombre de répétitions avec lesquelles l'émetteur transmet les données.

7. Brosse à dents selon la revendication 6, présentant un capteur couplé à l'émetteur, et où l'émetteur est équipé pour la transmission des données émises par le capteur.

8. Système constitué d'une brosse à dents présentant un émetteur selon la revendication 6 et d'un appareil supplémentaire séparé présentant un récepteur de transmission de données unidirectionnelle sans fil depuis la brosse à dents vers l'appareil supplémentaire, dans lequel le récepteur est équipé de façon à ne recevoir les jeux de données que d'un seul canal de transmission à chaque fois.

9. Système selon la revendication 8, dans lequel l'appareil supplémentaire présente un dispositif d'affichage pour l'affichage des données transmises par l'émetteur.
